# FASCICULE DE BREVET EUROPEEN

(11) **EP 2 997 346 B1**
(45) Date de publication et mention de la délivrance du brevet: **14.09.2022**
(21) Numéro de dépôt: 14729957.2
(22) Date de dépôt: 15.05.2014
(51) Int. Cl.: G01N 3/32, F01D 5/30

(54) **OPTIMISATION D'UN BANC D'ESSAI EN FATIGUE OLIGOCYCLIQUE OU EN FATIGUE OLIGOCYCLIQUE ET POLYCYCLIQUE**
OPTIMIERUNG EINER ZYKLISCHEN ERMÜDUNG ODER PRÜFSTAND FÜR ZYKLISCHE UND HOCHZYKLISCHE ERMÜDUNG
OPTIMISATION OF A CYCLE FATIGUE OR CYCLE AND HIGH-CYCLE FATIGUE TEST BENCH

(30) Priorité: 17.05.2013 FR 1354436
(43) Date de publication de la demande: 23.03.2016
(73) Titulaire: Safran Aircraft Engines, 75015 Paris (FR)
(72) Inventeur: MERIAUX, Jean, Vincent, Manuel, 77550 Moissy-Cramayel Cedex (FR); PUECH, Guillaume, 77550 Moissy-Cramayel Cedex (FR); RUIZ-SABARIEGO, Juan-Antonio, 77550 Moissy-Cramayel Cedex (FR); SERRES, Nathalie, 77550 Moissy-Cramayel Cedex (FR)
(74) Mandataire: Gevers & Orès
(86) Numéro de dépôt international: PCT/FR2014/051124
(87) Numéro de publication internationale: WO 2014/184494

(56) Documents cités:
- EP-A2- 2 241 872
- WO-A1-03/021233
- FR-A1- 2 927 997
- US-A1- 2002 017 144
- US-B1- 6 250 166
- US-B2- 6 718 833

## Description

### DOMAINE TECHNIQUE

La présente invention concerne un procédé d'optimisation d'un banc d'essai en fatigue oligocyclique, et éventuellement combiné oligocyclique et polycyclique, pour reproduire un appui de pièces de turbomachine, tel qu'un appui d'au moins un pied d'aube sur une portée d'alvéole d'un disque de rotor, et son organe de support correspondant.

### ETAT DE L'ART

Un disque de rotor de turbomachine comprend à sa périphérie une rangée annulaire d'alvéoles dans lesquelles sont emmanchés des pieds d'aube, qui sont par exemple du type en queue d'aronde, pour former une roue de rotor. En fonctionnement, les aubes sont soumises à des forces centrifuges et leurs pieds viennent en appui sur des portées latérales des alvéoles du disque. Les aubes sont en outre soumises à des oscillations liées aux efforts aérodynamiques qui induisent des glissements relatifs entre les pieds d'aube et le disque. Ces sollicitations influent sur la durée de vie des attaches aube-disque.

L'analyse de la durée de vie des attaches aube-disque repose sur des calculs rendus complexes par l'influence du contact sur les contraintes et durées de vie calculées. Le calcul de prédiction des durées de vie est possible via un modèle numérique complet. La difficulté du modèle mis en place réside dans les données d'entrée nécessaires. En effet, le modèle requiert une corrélation entre un champ de contraintes vu sous le contact aube-disque et le nombre de cycles à amorçage d'une fissure correspondante.

En vue de cette analyse, il est nécessaire de concevoir un essai capable de reproduire, en condition de laboratoire, un contact aube-disque soumis à un chargement de fatigue oligocyclique (LCF : *low cycle fatigue*) ou de fatigue oligocyclique et polycyclique (HCF : *high cycle fatigue*)*.* Un banc d'essai doit permettre de déterminer expérimentalement la durée de vie du contact aube-disque. Ces données expérimentales seront utilisées par la suite pour caler les méthodologies numériques de détermination de durée de vie sur les pièces réelles sur lesquelles il est impossible de déterminer expérimentalement une durée de vie.

Dans la technique actuelle, les bancs d'essai en fatigue oligocyclique, et éventuellement polycyclique, comprennent chacun un organe de support fixé à un bâti et définissant au moins une surface d'appui, et une éprouvette qui est reliée à des moyens de traction pour solliciter l'éprouvette en appui sur la ou chaque surface d'appui de l'organe. Un tel exemple de banc d'essai est décrit dans le document FR-A1-2927997.

Cependant, ces bancs d'essai ne sont pas entièrement satisfaisants car ils sont conçus sans tenir compte des caractéristiques de l'organe de support et de l'éprouvette, de la qualité du contact entre l'organe de support et l'éprouvette, de l'application industrielle du contact testé, du comportement dynamique du banc lors d'un essai en fatigue polycyclique, etc. Quant au banc d'essai décrit dans le document FR-A1-2927997, celui ne permet que des cycles de traction et pas de sollicitations cycliques latérales. Ce banc d'essai ne permet pas non plus un bon contact entre les différentes surfaces.

La présente invention a notamment pour but d'apporter une solution simple, efficace et économique à au moins une partie des problèmes précités.

### EXPOSE DE L'INVENTION

L'invention propose un procédé d'optimisation d'un banc d'essai en fatigue oligocyclique, et éventuellement combiné oligocyclique et polycyclique, ce banc d'essai étant destiné à reproduire un appui de pièces de turbomachine, tel qu'un appui d'au moins un pied d'aube sur une portée d'alvéole d'un disque de rotor, et comprenant un organe de support fixé à un bâti et définissant au moins deux surfaces d'appui, et une éprouvette qui est reliée à des moyens de traction pour solliciter l'éprouvette en appui sur la ou chaque surface d'appui de l'organe, procédé comprenant les étapes consistant à :
- déterminer des paramètres variables de l'organe de support et/ou de l'éprouvette, ainsi que des plages de variation de ces paramètres variables,
- déterminer au moins un objectif à atteindre ou à optimiser, une variation des valeurs d'au moins une partie des paramètres variables précités ayant une influence sur l'objectif,
- modifier une ou plusieurs des valeurs des paramètres précités, dans leurs plages respectives, et déterminer celles qui permettent de d'atteindre ou d'optimiser l'objectif, de façon à identifier des paramètres optimisés, et
- réaliser un organe de support et/ou une éprouvette à partir de paramètres fixes et des paramètres optimisés pour équiper un nouveau banc, ou modifier l'organe de support et/ou l'éprouvette d'un banc existant à partir des paramètres optimisés, et

l'organe de support s'étendant suivant une direction longitudinale et comportant en outre deux parties médianes portant respectivement les deux surfaces d'appui, chaque partie médiane étant reliée, du côté opposé aux moyens de traction, par un premier bras à un socle de fixation sur le bâti, chacune des parties médianes étant connectées, du côté des moyens de traction, par une paire de deuxième bras à des extrémités de deux barres transversales parallèles à distance l'une de l'autre, des secondes extrémités opposées des barres transversales étant reliées par une autre paire de deuxième bras à l'autre partie médiane du côté des moyens de tractions, les deux paires de deuxième bras et les premiers bras s'étendant suivant la direction longitudinale et dans une direction opposée par rapport aux parties médianes, et
le procédé comprend parmi les paramètres variables au moins une dimension des deuxième bras de chaque paire, et/ou l'angle d'inclinaison de ces deuxième bras vis-à-vis de la barre transversale correspondante ou vis-à-vis de la surface d'appui de la partie médiane correspondante,
l'objectif à atteindre étant sélectionné dans le groupe comprenant le parallélisme et le contact des surfaces d'appui entre l'éprouvette et l'organe de support, une amplitude maximale de glissement entre ces surfaces d'appui, et une pression de contact homogène entre ces surfaces d'appui, et une combinaison de ceux-ci.

L'invention propose ainsi un procédé permettant d'optimiser certains paramètres de l'organe de support et de l'éprouvette afin d'améliorer notamment la représentativité de l'essai vis-à-vis de l'application industrielle ainsi que la fiabilité des objectifs de cet essai. Les paramètres variables sont de préférence des paramètres géométriques mais peuvent être d'autres types de paramètres ou pas seulement des paramètres géométriques. L'invention permet en outre de modifier un banc d'essai pour qu'il s'adapte à n'importe quel type d'appui de pièces de turbomachine, et présente en outre l'avantage de pouvoir s'appliquer à un banc existant de la technique antérieure.

Le procédé selon l'invention peut être mis en œuvre par un système informatique comportant un logiciel d'optimisation tel que par exemple le logiciel DesignXplorer commercialisé par la société Ansys.

Les paramètres variables peuvent comprendre au moins une dimension des premiers bras, telle que leur longueur et/ou son épaisseur, et/ou l'angle d'inclinaison de ces bras vis-à-vis du socle ou vis-à-vis de la surface d'appui, et/ou la raideur de ces bras, et/ou la hauteur ou longueur entre le socle et la surface d'appui.

Lorsque les surfaces de l'éprouvette et de l'organe de support sont en appui sur une zone sensiblement rectangulaire, la pression de contact peut être considérée comme sensiblement homogène lorsque le rapport entre la pression de contact au niveau d'un bord inférieur de la zone et celle au niveau d'un bord supérieur de la zone est égal à environ un.

Dans le cas où le banc est utilisé pour des essais en fatigue oligocyclique et polycyclique et qu'il comporte deux pièces en forme de I à partie médiane flexible, dont une relie l'organe de support au bâti et dont l'autre relie une extrémité d'une lame vibrante aux moyens de traction, l'autre extrémité de la lame étant reliée à l'éprouvette, le banc comportant en outre des moyens d'excitation coopérant avec la pièce en I reliée à la lame pour faire vibrer cette lame lors des essais, l'objectif à atteindre peut être une fréquence cible de vibration de la lame. Dans le cas où au moins deux objectifs sont déterminés, au moins certains de ces objectifs sont classés par ordre d'importance. Ainsi, dans le cas où plusieurs valeurs de paramètres permettent d'optimiser ces objectifs, les paramètres qui seront choisis pourront être ceux qui permettent la meilleure optimisation de l'objectif de plus grande importance.

Dans le cas où le procédé est utilisé pour l'optimisation d'un banc d'essai reproduisant l'appui d'au moins un pied d'aube sur une portée d'alvéole d'un disque de rotor, les surfaces d'appui de l'éprouvette peuvent représenter des surfaces d'appui de portée d'alvéole d'un disque de rotor, et les surfaces d'appui de l'organe de support représenteer des surfaces d'appui d'un pied d'aube.

Selon l'invention, la zone correspond à une zone de contact dont la position correspond à un pourcentage de la longueur totale de l'organe de support.

Selon l'invention, la position de la zone de contact est comprise entre 20% et 40% de la longueur totale.

L'invention concerne aussi un organe de support comportant au moins deux surfaces d'appui destinées à coopérer avec des surfaces d'appui d'une éprouvette dans un banc d'essai pour reproduire un appui de pièces de turbomachine, tel qu'un appui d'au moins un pied d'aube sur une portée d'alvéole d'un disque de rotor, et faire des essais en fatigue oligocyclique, et éventuellement polycyclique. L'organe de support étant destiné à être fixé à un bâti et l'éprouvette devant être reliée à des moyens de traction pour solliciter l'éprouvette en appui chaque surface d'appui de l'organe de support, l'organe de support est caractérisé en ce qu'il comporte en outre deux parties médianes portant respectivement les deux surfaces d'appui, chaque partie médiane étant reliée, du côté opposé aux moyens de traction, par un premier bras à un socle de fixation sur le bâti et, du côté des moyens de traction, par une paire de deuxième bras à des extrémités de deux barres transversales parallèles à distance l'une de l'autre, les extrémités opposées des barres étant reliées par une autre paire de deuxième bras à l'autre partie médiane.

Avantageusement, les premier bras de l'organe de support sont sensiblement colinéaires aux efforts de cisaillement appliqués sur les surfaces d'appui et les deuxième bras sont sensiblement colinéaires aux efforts normaux appliqués sur ces surfaces, Cela permet une dissociation des contraintes normales et de cisaillement. Plus précisément, la géométrie de l'organe (colinéaire avec les efforts normaux d'un côté et les efforts de cisaillement de l'autre) permet, par le jeu des déformations d'une telle structure, de garder un contact parfaitement plan/plan quelle que soit la sollicitation.

La présente invention concerne également un banc d'essai en fatigue oligocyclique, et éventuellement polycyclique, caractérisé en ce qu'il comprend un organe de support tel que décrit ci-dessus et qu'il est optimisé par le procédé tel que décrit ci-dessus.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- la figure 1 est une vue très schématique de l'attache d'un pied d'aube dans une alvéole d'un disque de rotor d'une turbomachine,
- la figure 2 est une vue schématique partielle d'un banc d'essai en fatigue oligocyclique et montre une éprouvette et un organe de support de ce banc,
- la figure 3 est une vue à plus grande échelle d'une partie de la figure 2 et montre la zone de contact entre l'éprouvette et l'organe de support,
- la figure 4 est une vue schématique de l'organe de support de la figure 2 en cours d'essai en fatigue,
- la figure 5 est un graphe représentant l'évolution de l'angle d'ouverture dans la zone de contact en fonction de la position de cette zone,
- la figure 6 est une vue schématique partielle en perspective d'un autre banc d'essai en fatigue oligocyclique,
- la figure 7 et une demi-vue de l'organe de support et de l'éprouvette du banc d'essai de la figure 6,
- la figure 8 est une vue schématique en perspective d'un banc d'essai en fatigue oligocyclique et polycyclique,
- la figure 9 est une vue à plus grande échelle d'une partie de la figure 8 et montre la zone de contact entre l'éprouvette et l'organe de support,
- la figure 10 est un graphe représentant l'évolution de la pression de contact entre l'éprouvette et l'organe de support, entre un bord supérieur et un bord inférieur de la zone de contact,
- les figures 11 et 12 sont des graphes représentant l'influence de la variation de paramètres géométriques de l'organe de support sur l'homogénéité de la pression de contact entre l'éprouvette et l'organe de support et sur l'amplitude de glissement entre eux, et
- la figure 13 est un graphe représentant l'évolution de l'amplitude de déplacement de la zone de contact en fonction de la fréquence de vibration d'une lame du banc d'essai.

### DESCRIPTION DETAILLEE

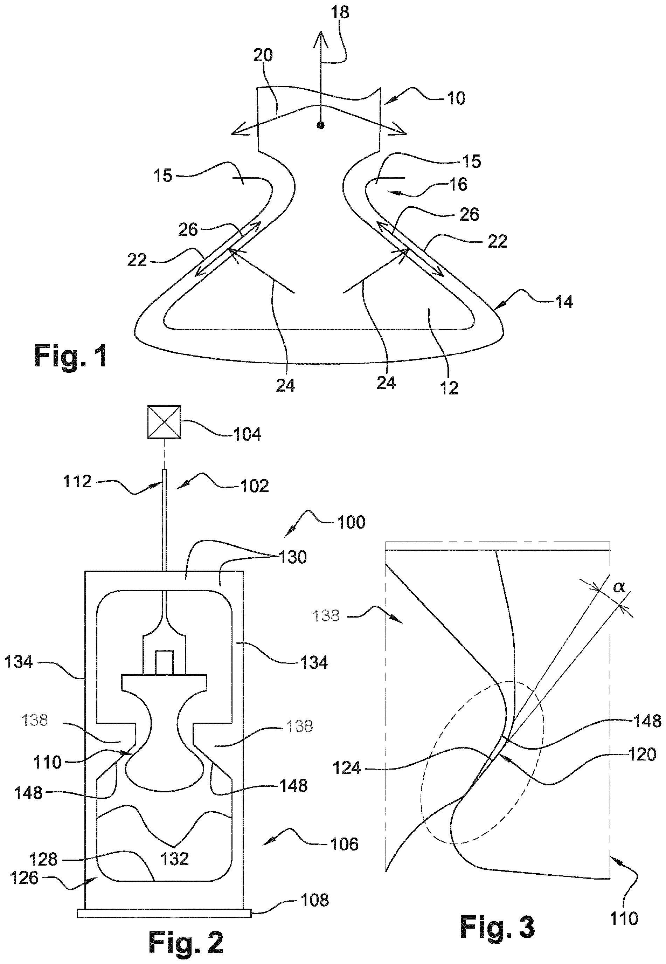

On se réfère d'abord à la figure 1 qui représente de manière schématique une attache aube-disque d'une turbomachine, l'aube 10 comportant un pied 12 qui est engagé dans une alvéole 14 de la périphérie d'un disque de rotor 16, ce disque comportant une rangée annulaire d'alvéoles 14 de ce type de réception des pieds d'aubes. L'ensemble formé par le disque 16 et les aubes 10 forment une roue de rotor de la turbomachine. Le pied 12 est ici en queue d'aronde. Deux alvéoles 14 adjacentes du disque 16 sont séparées l'un de l'autre par une dent 15, les dents 15 situées de part et d'autre du pied 12 de l'aube de la figure 1 étant partiellement représentées.

En fonctionnement, l'aube 10 est soumise à des forces centrifuges (flèche 18) et sa pale a tendance à osciller (flèche 20), ce qui provoque l'appui et le glissement des parties latérales du pied d'aube 12 sur des portées 22 latérales de l'alvéole 14 du disque. Les flèches 24 représentent des efforts normaux qui s'appliquent sur les surfaces en regard du pied d'aube 12 et de l'alvéole 14, et les flèches 26 désignent des efforts de cisaillement qui s'appliquent sur ces surfaces.

Les figures 2 à 4 représentent un banc d'essai conçu pour reproduire deux contacts aube-disque soumis à un chargement de fatigue oligocyclique (LCF : *Low Cycle Fatigue*)*,* afin de déterminer expérimentalement la durée de vie de ces contacts.

Le banc d'essai 100 comprend essentiellement deux parties, une première partie 102 qui est reliée à des moyens de traction 104 et qui est destinée à reproduire une dent d'un disque de rotor, et une deuxième partie 106 qui est reliée à un bâti 108 fixe et qui est destinée à reproduire des portions de deux pieds d'aube coopérant avec cette dent.

La première partie 102 comprend une éprouvette 110 qui est fixée à l'extrémité d'une lame 112 dont l'autre extrémité est reliée aux moyens de traction 104. Ces moyens de traction 104 comprennent par exemple un vérin dont l'extrémité libre de la tige est reliée à la lame 112 et dont le cylindre est porté par une partie fixe du banc d'essai. Ce vérin est de préférence orienté parallèlement à la lame 112 de façon à ce que la force de traction soit parallèle à l'axe longitudinal de la lame 112.

L'éprouvette 110 comprend une partie conformée en dent de disque, cette partie reproduisant des portions de deux alvéoles adjacentes du disque. Cette partie a une forme générale en queue d'aronde et comprend deux faces latérales conformées pour reproduire les portées 120 de deux alvéoles adjacentes du disque. Chacune de ces portées 120 comprend une surface d'appui 124 relativement plane (figure 3).

La deuxième partie 106 du banc d'essai 100 comprend un organe de support 126 comportant un socle 128 fixé au bâti 108 et deux barres transversales 130 parallèles entre elles et au socle et à distance l'une de l'autre, ces barres 130 étant reliées au socle par des bras 132, 134 qui portent des parties médianes 138 d'appui de l'éprouvette 110.

Le socle 128 a une forme parallélépipédique et est de préférence fixé à plat dans une position horizontale sur le bâti 108. Il est relié par deux extrémités opposées à des extrémités inférieures de premiers bras 132 dont les extrémités supérieures sont reliées à des parties médianes 138 portant des surfaces d'appui 148, ces parties médianes 138 étant reliées aux extrémités inférieures de seconds bras 134 dont les extrémités supérieures sont reliées aux extrémités des barres transversales 130. Les surfaces d'appui 148 sont destinées à coopérer avec les surfaces d'appui 124.

Les premiers bras 132 ou bras inférieurs sont au nombre de deux, chaque bras 132 reliant une extrémité du socle 128 à une extrémité inférieure de la partie médiane 138. En position de repos, ces bras 132 sont sensiblement perpendiculaires au socle 126.

Les seconds bras 134 ou bras supérieurs sont au nombre de quatre, chaque partie médiane 138 étant reliée par une paire de seconds bras 134 à des premières extrémités des barres transversales 130 dont les extrémités opposées sont reliées par l'autre paire de seconds bras 134 à l'autre partie médiane 138. Les seconds bras 134 de chaque paire sont parallèles et à distance l'un de l'autre, chaque barre transversale 130 et les seconds bras 134 reliés à cette barre étant situés sensiblement dans un même plan. En position de repos, ces bras 134 sont sensiblement perpendiculaires aux barres 130.

En position de montage représentée en figure 2, la lame 112 passe entre les barres 130 et l'éprouvette 110 s'étend entre les parties médianes 138, de sorte que les surfaces 124 de l'éprouvette 110 soient en appui sur les surfaces 148 des parties médianes 138.

Comme cela est visible en figure 3, au cours d'un essai de fatigue, même si les surfaces d'appui 124, 148 de l'éprouvette 110 et de l'organe de support 126 sont parfaitement parallèles et en appui l'une sur l'autre au démarrage de l'essai, il est possible que, du fait des déformations des pièces, ces surfaces se désalignent et s'écartent l'une de l'autre, ce qui se traduit par l'apparition d'un angle d'ouverture α dans la zone de contact.

Cet inconvénient est supprimé grâce au procédé d'optimisation selon l'invention qui permet de modifier l'organe de support et/ou l'éprouvette de façon à s'assurer que l'angle d'ouverture α reste nul pendant toute la durée de l'essai.

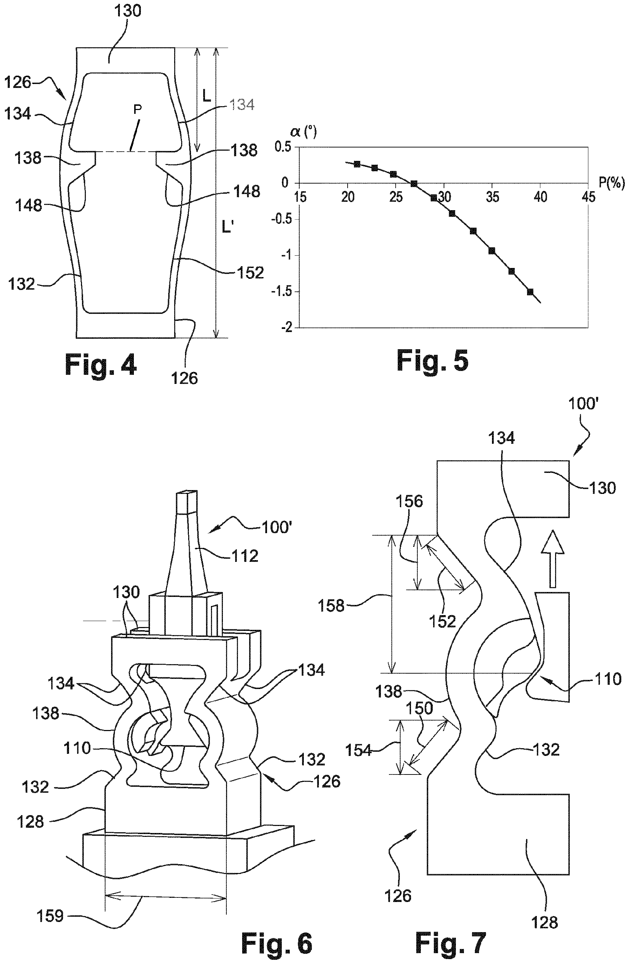

Comme cela est visible en figure 4, les pièces du banc d'essai 100 et en particulier l'organe de support sont soumis à des efforts et subissent des déformations qui sont ici visibles par des déformations des bras 132, 134 de l'organe de support 126 qui se traduisent par un écartement des parties médianes 138 et des surfaces d'appui 148 l'une de l'autre et risque de créer l'apparition d'un angle d'ouverture α entre ces surfaces.

Comme expliqué dans ce qui précède, le procédé selon l'invention permet d'optimiser un ou plusieurs paramètres, notamment géométriques, variables du banc d'essai pour parvenir au mieux à un objectif. L'objectif recherché est ici d'éviter l'apparition de l'angle d'ouverture α en cours d'essai, cet angle doit donc rester nul. Le paramètre géométrique variable est ici la position de la zone de contact qui correspond en figure 4 à la dimension L s'étendant entre les bords supérieurs des barres 130 et les extrémités inférieures des bras 134 (et est sensiblement égale à la somme de la longueur des bras 134 et de l'épaisseur des barres 130, ces dimensions étant mesurées dans une direction sensiblement parallèle à l'axe longitudinal de la lame 112 précitée).

La position de la zone de contact est exprimée en pourcentage de la longueur totale L' de l'organe de support 126. La position P de la zone de contact est ainsi égale au rapport (L/L')*100.

Le procédé selon l'invention consiste notamment à déterminer par calcul l'influence de la variation de P sur l'angle d'ouverture α et à déterminer pour quelle valeur de P l'objectif est atteint (α = 0). Le procédé peut consister à établir un graphe tel que représenté en figure 5 dans lequel la plage de variation de P est [20% - 40%]. On constate que l'angle α est nul pour P = 27% environ. Il faut donc que la zone de contact entre l'éprouvette 110 et l'organe de support 126 du banc d'essai 110 des figures 2 et 4 soit située à environ 27% de la longueur totale de l'organe de support, mesuré depuis les barres transversales 130.

Les figures 6 et 7 représentent un autre banc d'essai 100' en fatigue oligocyclique (LCF : *Low Cycle Fatigue*)*,* qui a été conçu et optimisé grâce au procédé selon l'invention.

Ce banc d'essai 100' diffère de celui 100 décrit dans ce qui précède notamment en ce que ses bras 132, 134 sont inclinés par rapport au socle 128 et aux barres transversales 130, les extrémités supérieures des bras 132 étant chacune reliées à l'extrémité inférieure d'une partie médiane 138 en portion de cylindre, dont l'extrémité supérieure est reliée aux extrémités inférieures des bras 134. Les bras 132 sont sensiblement colinéaires aux efforts de cisaillement appliqués sur les surfaces 124, 148 et les bras 134 sont sensiblement colinéaires aux efforts normaux appliqués sur ces surfaces.

Le procédé selon l'invention a été appliqué en utilisant les paramètres suivants comme paramètres géométriques variables : l'angle d'inclinaison de chaque bras 132, 134 (par rapport au socle 128 par exemple), l'épaisseur des différentes parties de l'organe de support 126, et la raideur et la longueur des bras 132, 134. Aux figures 6 et 7, les flèches désignées par les références 150-159 représentent certains de ces paramètres: les flèches 150, 152 représentent les longueurs des bras 132, 134, respectivement, les flèches 154, 156 représentent les hauteurs de ces bras 132, 134, respectivement, la flèche 158 représente la hauteur ou position de la zone de contact, et la flèche 159 représente la largeur du socle 128 ou de l'organe de support 126.

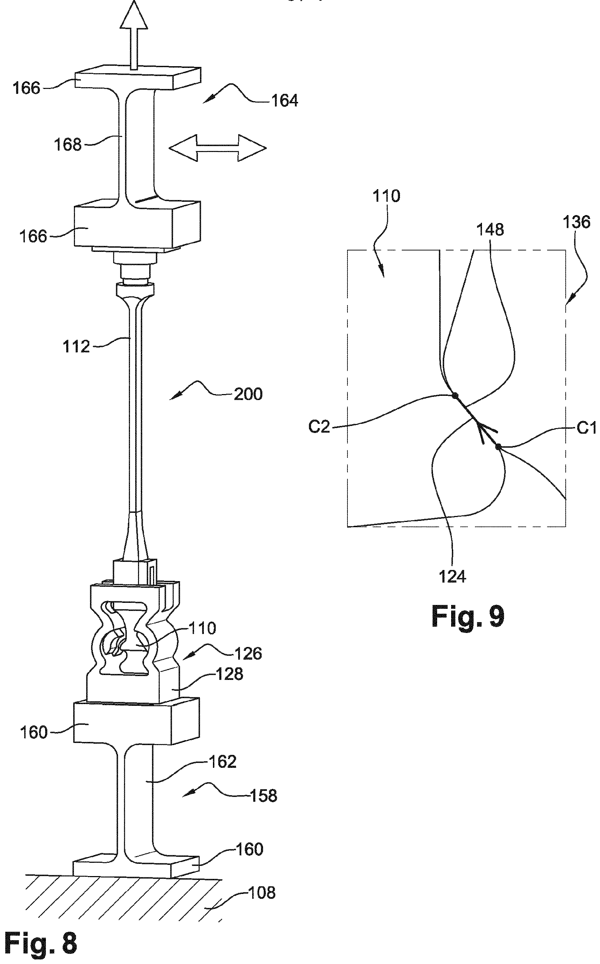

La figure 8 représente un banc d'essai 200 conçu pour reproduire deux contacts aube-disque soumis à un chargement de fatigue oligocyclique (LCF : *Low Cycle Fatigue*) et polycyclique (HCF : *High Cycle Fatigue*)*.*

Le banc d'essai 200 comprend toutes les caractéristiques précitées du banc 100', avec en plus les caractéristiques suivantes.

L'organe 126 est fixé au bâti par l'intermédiaire d'une pièce 158 en forme de I. Cette pièce 158 comporte deux blocs 160 massifs sensiblement parallélépipédiques et parallèles qui sont reliés entre eux par une paroi 162 flexible perpendiculaire aux blocs. Le socle 128 de l'organe 126 est appliqué et fixé sur un des blocs 160, le second bloc étant fixé au bâti 108.

La lame 112 est fixée aux moyens de traction par l'intermédiaire d'une autre pièce 164 en forme de I, sensiblement identique à la première 160. L'un des blocs 166 de cette pièce 164 est fixé à une extrémité de la lame 112 (opposée à l'éprouvette 110) et l'autre bloc 166 est relié aux moyens de traction. Les parois 162, 168 flexibles des pièces en I sont sensiblement coplanaires.

Le banc d'essai 200 comprend des moyens d'excitation haute fréquence, tels qu'un pot vibrant, qui prennent appui sur la pièce 164 en I reliée à la lame 112, par exemple au niveau du bloc 166 relié à cette lame, pour faire vibrer la lame 112.

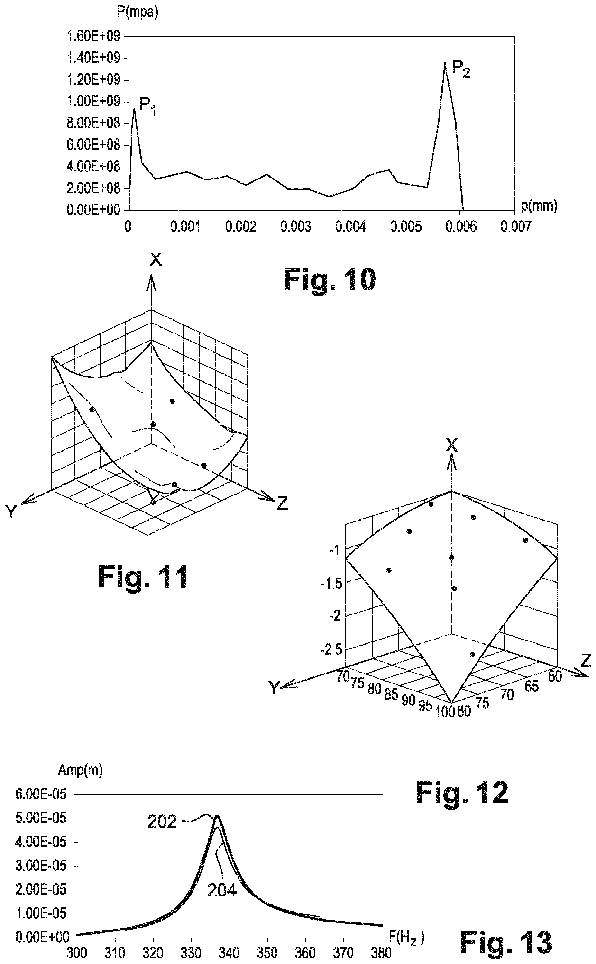

La figure 9 est une vue à plus grande échelle de la zone de contact entre l'éprouvette 110 et l'organe de support 126 de la figure 8. Pendant l'essai en fatigue, il est important que la pression de contact entre les surfaces d'appui 124, 148 de l'éprouvette 110 et de l'organe de support 126 soit sensiblement homogène sur toute l'étendue de ces surfaces. La zone de contact peut être assimilée à une surface sensiblement rectangulaire et plane. La pression de contact est considérée comme homogène lorsque la pression de contact P1 située au niveau du bord inférieur (en C1) de la zone de contact est sensiblement égale à la pression de contact P2 située au niveau du bord supérieur (en C2) de la zone de contact, c'est-à-dire que le rapport P1/P2 est sensiblement égal à 1. Le graphe de la figure 10 montre l'évolution de la pression de contact P(mPa) en fonction de la position dans la zone de contact, mesurée en millimètre depuis C1, dans un exemple de réalisation.

Les figures 11 et 12 illustrent un mode de réalisation du procédé selon l'invention qui est ici utilisé pour atteindre simultanément deux objectifs : le premier étant le rapport de pression P1/P2 précité qui doit être égal à 1 environ, et le second étant l'amplitude de glissement des surfaces d'appui 124, 148 qui doit être la plus grande possible.

Les figures 11 et 12 présentent les surfaces de réponse d'une série de calculs, c'est-à-dire la valeur des critères d'optimisation en fonction des paramètres variables d'entrée. Ces surfaces de réponse permettent par la suite de proposer le meilleur candidat vis-à-vis des critères d'entrée.

La figure 11 montre l'évolution du rapport de pression (en X), en fonction de la longueur des bras 132 (flèche 154 en figure 7 - en Y (mm)) et de la longueur des bras 134 (flèche 156 en figure 7 - en Z (mm)). La figure 12 montre l'amplitude de glissement des surfaces d'appui 124, 148 (en X (10⁻⁴m), en fonction de la longueur des bras 132, 134 (en Y (mm) et Z (mm), respectivement).

Le tableau ci-dessous comprend les objectifs des étapes d'optimisation du procédé selon l'invention.

| | Longueur des bras 132 (mm) | Longueur des bras 134 (mm) | Amplitude du glissement (m) | Rapport de pression P1/P2 |
|---|---|---|---|---|
| Objectif | | | A maximiser | Valeur cible recherchée |
| Valeur cible | | | | 1 |
| Importance | | | | Haute |
| Candidat A | 99,951 | 79,953 | -0,00027375 | 0,83284 |
| Candidat B | 96,879 | 79,944 | -0,00025343 | 0,83521 |
| Candidat C | 81,903 | 79,918 | -0,00016705 | 0,99952 |

La plage de variation de la longueur des bras 132 est [80, 100]mm et celle de la longueur des bras 134 est [79, 80]mm. Chaque candidat A, B et C correspond à un ensemble de valeurs des paramètres considérés. Comme expliqué dans ce qui précède, l'objectif est ici à la fois de maximiser l'amplitude de glissement des surfaces d'appui et de faire en sorte que le rapport de pression P1/P2 soit le plus proche possible de 1. Dans les critères d'importance, on note que l'objectif de rapport de pression prévaut sur l'objectif d'amplitude de glissement.

On constate que les candidats A et B permettent d'obtenir une amplitude de glissement relativement importante, et que le candidat C permet d'obtenir un rapport de pression proche de 1 avec une amplitude de glissement relativement bonne. Compte tenu de l'importance de l'objectif de rapport de pression, le candidat C est choisi, c'est-à-dire que les valeurs correspondantes des longueurs des bras 132, 134 sont considérées comme des valeurs optimisées pour atteindre le double objectif précité.

Dans le cas où l'objectif à atteindre est une fréquence de vibration, il est nécessaire d'adapter le banc pour pouvoir appliquer cette fréquence car la fréquence d'excitation ou de sollicitation HCF n'est pas constante. La sollicitation HCF est principalement pilotée par la géométrie et la raideur de l'organe de support 126 et surtout par la géométrie et la raideur de la lame 112. La fréquence de vibration n'est pas pilotée et dépend de la géométrie et de la raideur de l'organe de support 126 et de la lame 112, par exemple.

Le procédé d'optimisation est appliqué avec le même protocole que précédemment, proposant ainsi des modifications de paramètres du banc d'essai. Le comportement harmonique complet du nouveau banc est ensuite calculé et superposé à la réponse cible. La figure 13 est un graphe représentant l'évolution de l'amplitude de déplacement (Amp (m)) des surfaces d'appui 124, 148 de l'éprouvette 110 et de l'organe d'appui 126 en fonction de la fréquence de vibration de la lame 112. La courbe 202 représente la réponse harmonique cible et la courbe 204 représente la réponse harmonique calculée par le procédé selon l'invention. On constate que le procédé d'optimisation du banc est efficace et que la technologie du banc d'essai permet, en faisant varier des paramètres, d'adapter la réponse harmonique en fonction de l'application.

Le procédé selon l'invention peut être mis en œuvre par un système informatique destiné notamment à effectuer les calculs d'optimisation.

La dernière étape du procédé selon l'invention consiste à réaliser un organe de support et/ou une éprouvette à partir de paramètres fixes et des paramètres optimisés pour équiper un nouveau banc, ou à modifier l'organe de support et/ou l'éprouvette d'un banc existant à partir des paramètres optimisés.

## Revendications

1. Procédé d'optimisation d'un banc d'essai (100, 200) en fatigue oligocyclique et éventuellement polycyclique, ce banc d'essai étant destiné à reproduire un appui de pièces de turbomachine, et comprenant un organe de support (126) fixé à un bâti (108) et définissant au moins deux surfaces d'appui (148), et une éprouvette (110) qui est reliée à des moyens de traction (104) pour solliciter l'éprouvette en appui sur la ou chaque surface d'appui de l'organe de support, procédé comprenant les étapes consistant à :
- déterminer des paramètres variables de l'organe de support et/ou de l'éprouvette, ainsi que des plages de variation de ces paramètres variables,
- déterminer au moins un objectif à atteindre ou à optimiser, une variation des valeurs d'au moins une partie des paramètres variables précités ayant une influence sur l'objectif,
- modifier une ou plusieurs des valeurs des paramètres variables précités, dans leurs plages respectives, et déterminer celles qui permettent d'atteindre ou d'optimiser l'objectif, de façon à identifier des paramètres optimisés, et
- réaliser un organe de support et/ou une éprouvette à partir de paramètres fixes et des paramètres optimisés pour équiper un nouveau banc d'essai, ou modifier l'organe de support et/ou l'éprouvette d'un banc d'essai existant à partir des paramètres optimisés, et
**caractérisé en ce que**,
l'organe de support (126) s'étendant suivant une direction longitudinale et comportant en outre deux parties médianes (138) portant respectivement les deux surfaces d'appui (148), chaque partie médiane (138) étant reliée, du côté opposé aux moyens de traction (104), par un premier bras (132) à un socle de fixation (128) sur le bâti (108), chacune des parties médianes étant connectée, du côté des moyens de traction (104), par une paire de deuxième bras (134) à des premières extrémités de deux barres transversales (130) parallèles à distance l'une de l'autre, des secondes extrémités opposées des barres transversales étant reliées par une autre paire de deuxième bras à l'autre partie médiane, du côté des moyens de tractions, les deux paires de deuxième bras et les premiers bras s'étendant suivant la direction longitudinale et dans une direction opposée par rapport aux parties médianes, et
le procédé comprend parmi les paramètres variables au moins une dimension des deuxième bras (134) de chaque paire, et/ou l'angle d'inclinaison de ces deuxième bras vis-à-vis de la barre transversale (130) correspondante ou vis-à-vis de la surface d'appui (148) de la partie médiane correspondante,
l'objectif à atteindre étant sélectionné dans le groupe comprenant le parallélisme et le contact des surfaces d'appui (124, 148) entre l'éprouvette (110) et l'organe de support (126), une amplitude maximale de glissement entre ces surfaces d'appui, et une pression de contact homogène entre ces surfaces d'appui, et une combinaison de ceux-ci.

2. Procédé selon la revendication 1, **caractérisé en ce que** les paramètres variables comprennent au moins une dimension de chaque premier bras (132), et/ou l'angle d'inclinaison de chaque premier bras vis-à-vis du socle ou vis-à-vis de la surface d'appui (148) de la partie médiane correspondante, et/ou la hauteur ou longueur entre le socle (128) et les surfaces d'appui (148).

3. Procédé selon l'une des revendications précédentes, **caractérisé en ce que**, les surfaces d'appui (124, 148) de l'éprouvette (110) et de l'organe (126) de support étant en appui sur une zone rectangulaire, la pression de contact est considérée comme homogène lorsque le rapport entre la pression de contact (P1) au niveau d'un bord inférieur de la zone et celle (P2) au niveau d'un bord supérieur de la zone est égal à environ un.

4. Procédé selon l'une des revendications précédentes, **caractérisé en ce que**, le banc d'essai (200) étant utilisé pour des essais en fatigue oligocyclique et polycyclique et comportant deux pièces (158, 164) en forme de I à partie médiane flexible, dont une relie l'organe de support (126) au bâti (108) et dont l'autre relie une extrémité d'une lame (112) vibrante aux moyens de traction (104), l'autre extrémité de la lame étant reliée à l'éprouvette (110), le banc d'essai comportant en outre des moyens d'excitation coopérant avec la pièce en I reliée à la lame pour faire vibrer cette lame lors des essais, l'objectif à atteindre est une fréquence cible de vibration de la lame.

5. Procédé selon l'une des revendications précédentes, **caractérisé en ce que**, dans le cas où au moins deux objectifs sont déterminés, au moins une partie de ces objectifs sont classés par ordre d'importance.

6. Procédé selon l'une des revendications précédentes, pour l'optimisation d'un banc d'essai reproduisant l'appui d'au moins un pied d'aube sur une portée d'alvéole d'un disque de rotor, **caractérisé en ce que** les surfaces d'appui (124) de l'éprouvette représentent des surfaces d'appui de portée d'alvéole d'un disque de rotor, et les surfaces d'appui (148) de l'organe de support (126) représentent des surfaces d'appui d'un pied d'aube.

7. Procédé selon la revendication 1, **caractérisé en ce que** l'appui de pièces de turbomachine est un appui d'au moins un pied d'aube sur une portée d'alvéole d'un disque de rotor.

8. Procédé selon la revendication 1, **caractérisé en ce que** lesdits paramètres variables sont des paramètres géométriques.

9. Procédé selon l'une quelconque des revendications 3 à 8, **caractérisé en ce que** la zone correspond à une zone de contact dont la position (P) correspond à un pourcentage de la longueur totale (L') de l'organe de support.

10. Procédé selon la revendication précédente, **caractérisé en ce que** la position (P) de la zone de contact est comprise entre 20% et 40% de la longueur totale (L').

11. Organe de support (126) comportant au moins deux surfaces d'appui (148) destinées à coopérer avec des surfaces d'appui (124, 148) d'une éprouvette (110) dans un banc d'essai (100, 200) pour reproduire un appui de pièces de turbomachine, et faire des essais en fatigue oligocyclique et éventuellement polycyclique,
l'organe de support étant destiné à être fixé à un bâti (108) et l'éprouvette (110) devant être reliée à des moyens de traction (104) pour solliciter l'éprouvette en appui chaque surface d'appui (148) de l'organe de support (126),
**caractérisé en ce que** l'organe de support s'étend suivant une direction longitudinale et comporte en outre deux parties médianes (138) portant respectivement les deux surfaces d'appui (148), chaque partie médiane (138) étant reliée, du côté opposé aux moyens de traction (104), par un premier bras (132) à un socle de fixation (128) sur le bâti (108), chacune des parties médianes étant connectée, du côté des moyens de traction (104), par une paire de deuxième bras (134) à des premières extrémités de deux barres transversales (130) parallèles à distance l'une de l'autre, des deuxièmes extrémités opposées des barres transversales étant reliées par une autre paire de deuxième bras à l'autre partie médiane, du côté des moyens de traction (104), les deux paires de deuxième bras et les premiers bras s'étendant suivant la direction longitudinale et dans une direction opposée par rapport aux parties médianes.

12. Organe de support selon la revendication 10, dont les premier bras (132) sont colinéaires aux efforts de cisaillement appliqués sur les surfaces d'appui (124, 148) et les deuxième bras (134) sont colinéaires aux efforts normaux appliqués sur ces surfaces d'appui.

13. Organe de support selon la revendication 10, **caractérisé en ce que** l'appui de pièces de turbomachine est un appui d'au moins un pied d'aube sur une portée d'alvéole d'un disque de rotor.

14. Banc d'essai (100, 200) en fatigue oligocyclique et éventuellement polycyclique, comportant un organe de support (128) selon l'une des revendications 11 ou 12, **caractérisé en ce qu'**il est optimisé par le procédé selon l'une des revendications 1 à 10.

## Patentansprüche

1. Verfahren zur Optimierung eines Prüfstands (100, 200) für oligocyclische und gegebenenfalls polycyclische Ermüdung, wobei dieser Prüfstand dazu bestimmt ist, eine Auflage von Teilen der Turbomaschine zu reproduzieren, und eine Einrichtung zum Stützen (126), das an einem Gestell (108) befestigt ist und mindestens zwei Auflageflächen (148) definiert, und einen Prüfling (110) umfasst, der mit Zugmitteln (104) verbunden ist, um den Prüfling, der auf der oder jeder Auflagefläche der Einrichtung zum Stützen aufliegt, vorzuspannen, wobei das Verfahren die Schritte umfasst, bestehend aus:
- Bestimmen von variablen Parametern der Einrichtung zum Stützen und/oder des Prüflings sowie von Variationsreichweiten dieser variablen Parameter,
- Bestimmen mindestens eines zu erreichenden oder zu optimierenden Ziels, wobei eine Variation der Werte von mindestens einem Teil der vorgenannten variablen Parameter einen Einfluss auf das Ziel hat,
- Modifizieren eines oder mehrerer der Werte der vorgenannten variablen Parameter in ihren jeweiligen Bereichen und Bestimmen derjenigen, die es ermöglichen, das Ziel zu erreichen oder zu optimieren, um optimierte Parameter zu identifizieren, und
- Herstellen einer Einrichtung zum Stützen und/oder eines Prüflings ausgehend von festen Parametern und optimierten Parametern, um einen neuen Prüfstand einzurichten oder die Einrichtung zum Stützen und/oder den Prüfling eines bestehenden Prüfstands ausgehend von den optimierten Parametern zu modifizieren, und
**dadurch gekennzeichnet, dass**
die Einrichtung zum Stützen (126) sich entlang einer Längsrichtung erstreckt und weiter zwei mittlere Abschnitte (138) umfasst, die jeweils die beiden Auflageflächen (148) tragen, wobei jeder mittlere Abschnitt (138), auf der den Zugmitteln (104) gegenüberliegenden Seite, über einen ersten Arm (132) mit einem Befestigungssockel (128) am Gestell (108) verbunden ist, wobei jeder der mittleren Abschnitte, auf der Seite der Zugmittel (104), über ein Paar zweiter Arme (134) mit ersten Enden von zwei parallelen, voneinander beabstandeten Querstangen (130) verbunden ist, wobei gegenüberliegende zweite Enden der Querstangen über ein weiteres Paar zweiter Arme mit dem anderen mittleren Abschnitt, auf der Seite der Zugmittel, verbunden sind, wobei sich die beiden Paare zweiter Arme und die ersten Arme entlang der Längsrichtung und in einer entgegengesetzten Richtung in Bezug auf die mittleren Abschnitte erstrecken, und
das Verfahren unter den variablen Parametern mindestens eine Abmessung der zweiten Arme (134) jedes Paares und/oder den Neigungswinkel dieser zweiten Arme gegenüber der entsprechenden Querstange (130) oder gegenüber der Auflagefläche (148) des entsprechenden mittleren Abschnitts umfasst,
wobei das zu erreichende Ziel aus der Gruppe ausgewählt wird, die Parallelität und Kontakt der Auflageflächen (124, 148) zwischen dem Prüfling (110) und der Einrichtung zum Stützen (126), eine maximale Gleitamplitude zwischen diesen Auflageflächen und einen homogenen Kontaktdruck zwischen diesen Auflageflächen und eine Kombination davon umfasst.

2. Verfahren nach Anspruch 1, **dadurch gekennzeichnet, dass** die variablen Parameter mindestens eine Abmessung jedes ersten Arms (132) und/oder den Neigungswinkel jedes ersten Arms gegenüber dem Sockel oder gegenüber der Auflagefläche (148) des entsprechenden mittleren Abschnitts und/oder die Höhe oder Länge zwischen dem Sockel (128) und den Auflageflächen (148) umfassen.

3. Verfahren nach einem der vorstehenden Ansprüche, **dadurch gekennzeichnet, dass**, da die Auflageflächen (124, 148) des Prüflings (110) und der Einrichtung (126) zum Stützen auf einem rechteckigen Bereich aufliegen, der Kontaktdruck als homogen angesehen wird, wenn das Verhältnis zwischen dem Kontaktdruck (P1) an einem unteren Rand des Bereichs und demjenigen (P2) an einem oberen Rand des Bereichs etwa eins beträgt.

4. Verfahren nach einem der vorstehenden Ansprüche, **dadurch gekennzeichnet, dass** der Prüfstand (200) für oligocyclische und polycyclische Ermüdungstests verwendet wird und zwei I-förmige Teile (158, 164) mit flexiblem mittleren Abschnitt umfasst, von denen eines die Einrichtung zum Stützen (126) mit dem Gestell (108) verbindet und das andere ein Ende einer vibrierenden Schneide (112) mit den Zugmitteln (104) verbindet, wobei das andere Ende der Schneide mit dem Prüfling (110) verbunden ist, wobei der Prüfstand weiter Erregungsmittel umfasst, die mit dem mit der Schneide verbundenen I-Teil zusammenwirken, um diese Schneide während der Tests in Schwingung zu versetzen, wobei das zu erreichende Ziel eine Zielfrequenz der Vibration der Schneide ist.

5. Verfahren nach einem der vorstehenden Ansprüche, **dadurch gekennzeichnet, dass** in dem Fall, dass mindestens zwei Ziele bestimmt werden, mindestens ein Teil dieser Ziele nach ihrer Wichtigkeit geordnet wird.

6. Verfahren nach einem der vorstehenden Ansprüche zur Optimierung eines Prüfstandes, der die Auflage mindestens eines Schaufelfußes auf einem Alveolenbereich einer Rotorscheibe reproduziert, **dadurch gekennzeichnet, dass** die Auflageflächen (124) des Prüflings Auflageflächen des Alveolenbereichs einer Rotorscheibe und die Auflageflächen (148) der Einrichtung zum Stützen (126) Auflageflächen eines Schaufelfußes repräsentieren.

7. Verfahren nach Anspruch 1, **dadurch gekennzeichnet, dass** die Auflage von Teilen der Turbomaschine eine Auflage von mindestens einem Schaufelfuß auf einem Alveolenbereich einer Rotorscheibe ist.

8. Verfahren nach Anspruch 1, **dadurch gekennzeichnet, dass** die variablen Parameter geometrische Parameter sind.

9. Verfahren nach einem der Ansprüche 3 bis 8, **dadurch gekennzeichnet, dass** der Bereich einem Kontaktbereich entspricht, dessen Position (P) einem Prozentsatz der Gesamtlänge (L') der Einrichtung zum Stützen entspricht.

10. Verfahren nach dem vorstehenden Anspruch, **dadurch gekennzeichnet, dass** die Position (P) des Kontaktbereichs zwischen 20% und 40% der Gesamtlänge (L') beträgt.

11. Einrichtung zum Stützen (126), die mindestens zwei Auflageflächen (148) umfasst, die dazu bestimmt sind, mit Auflageflächen (124, 148) eines Prüflings (110) in einem Prüfstand (100, 200) zusammenzuwirken, um eine Auflage von Teilen der Turbomaschine zu reproduzieren und oligocyclische und gegebenenfalls polyzyklische Ermüdungstests durchzuführen,
wobei die Einrichtung zum Stützen dazu bestimmt ist, an einem Gestell (108) befestigt zu werden, und der Prüfling (110) mit Zugmitteln (104) verbunden werden muss, um den Prüfling, der auf jeder Auflagefläche (148) der Einrichtung zum Stützen (126) aufliegt, vorzuspannen,
**dadurch gekennzeichnet, dass** die Einrichtung zum Stützen sich entlang einer Längsrichtung erstreckt und weiter zwei mittlere Abschnitte (138) umfasst, die jeweils die beiden Auflageflächen (148) tragen, wobei jeder mittlere Abschnitt (138), auf der den Zugmitteln (104) gegenüberliegenden Seite, über einen ersten Arm (132) mit einem Befestigungssockel (128) am Gestell (108) verbunden ist, wobei jeder der mittleren Abschnitte, auf der Seite der Zugmittel (104), über ein Paar zweiter Arme (134) mit ersten Enden von zwei parallelen, voneinander beabstandeten Querstangen (130) verbunden ist, wobei gegenüberliegende zweite Enden der Querstangen über ein weiteres Paar zweiter Arme mit dem anderen mittleren Abschnitt, auf der Seite der Zugmittel (104), verbunden sind, wobei sich die beiden Paare zweiter Arme und die ersten Arme entlang der Längsrichtung und in einer entgegengesetzten Richtung in Bezug auf die mittleren Abschnitte erstrecken.

12. Einrichtung zum Stützen nach Anspruch 10, deren erste Arme (132) kollinear zu den auf die Auflageflächen (124, 148) ausgeübten Scherkräften und die zweite Arme (134) kollinear zu den auf diese Auflageflächen ausgeübten Normalkräften sind.

13. Einrichtung zum Stützen nach Anspruch 10, **dadurch gekennzeichnet, dass** die Auflage von Teilen der Turbomaschine eine Auflage von mindestens einem Schaufelfuß auf einem Alveolenbereich einer Rotorscheibe ist.

14. Prüfstand (100, 200) für oligocyclische und gegebenenfalls polycyclische Ermüdung, der eine Einrichtung zum Stützen (128) nach einem der Ansprüche 11 oder 12 umfasst, **dadurch gekennzeichnet, dass** er durch das Verfahren nach einem der Ansprüche 1 bis 10 optimiert wird.

## Claims

1. Method for optimising a low-cycle, and optionally high-cycle, fatigue test rig (100, 200), said test rig being intended to reproduce a support of turbine engine parts, and comprising a support member (126) which is fixed to a mount (108) and defines at least two bearing surfaces (148), and a test piece (110) which is connected to traction means (104) for loading the test piece so that it bears against the or each bearing surface of the support member, the method comprising the steps consisting in:
- determining variable parameters of the support member and/or the test piece, as well as ranges of variation of said variable parameters,
- determining at least one objective to be achieved or optimised, a variation of the values of at least some of the above-mentioned variable parameters affecting the objective,
- modifying one or more of the values of the above-mentioned variable parameters, in the respective ranges thereof, and determining those which make it possible to achieve or optimise the objective so as to identify optimised parameters, and
- producing a support member and/or a test piece based on fixed parameters and parameters optimised for equipping a new test rig, or modifying the support member and/or the test piece of an existing test rig based on the optimised parameters, and
**characterised in that**,
the support member (126) extends along a longitudinal direction and further comprising two middle portions (138) respectively supporting the two bearing surfaces (148), each middle portion (138) being connected, on the side opposite the traction means (104), by a first arm (132) to a base (128) for fixing to the mount (108) and, each of the middle portions being connected, on the side of the traction means (104), by a pair of second arms (134) to first ends of two parallel crossbars (130) which are at a distance from one another, second opposite ends of the bars being connected by another pair of second arms to the other middle portion, on the side of the traction means (104), the two pairs of second arms and first arms extending along the longitudinal direction and in opposite direction with regard to the middle portions, and,
the method includes among the variable parameters at least one dimension of the second arms (134) of each pair, and/or the angle of inclination of said second arms with respect to the corresponding crossbar (130) or with respect to the bearing surface (148) of the corresponding middle portion,
the objective to be achieved is selected from the group comprising the parallelism and the contact of the bearing surfaces (124, 148) between the test piece (110) and the support member (126), a maximum amplitude of sliding between said bearing surfaces, and a homogeneous contact pressure between said bearing surfaces, and a combination of the ones.

2. Method according to claim 1, **characterised in that** the variable parameters include at least one dimension of each first arm (132), and/or the angle of inclination of each first arm with respect to the base or with respect to the bearing surface (148) of the corresponding middle portion, and/or the height or length between the base (128) and the bearing surfaces (148).

3. Method according to one of the preceding claims, **characterised in that**, the surfaces (124, 148) of the test piece (110) and the support member (126) bearing against a rectangular region, the contact pressure is considered to be homogeneous when the ratio between the contact pressure (P1) in the region of a lower edge of the region and that (P2) in the region of an upper edge of the region is equal to approximately one.

4. Method according to any of the preceding claims, **characterised in that**, the test rig (200) being used for low-cycle and high-cycle fatigue tests and comprising two I-shaped parts (158, 164) having a flexible middle portion, one of which connects the support member (126) to the mount (108) and the other of which connects one end of a vibrating blade (112) to the traction means (104), the other end of the blade being connected to the test piece (110), the test rig further comprising excitation means cooperating with the I-shaped part connected to the blade for making said blade vibrate during the tests, the objective to be achieved is a target vibration frequency of the blade.

5. Method according to any of the preceding claims, **characterised in that**, in the case in which at least two objectives are determined, at least some of said objectives are ranked in order of importance.

6. Method according to any of the preceding claims, for optimising a test rig reproducing the support of at least one blade root against a recess projection of a rotor disc, **characterised in that** the bearing surfaces (124) of the test piece represent recess projection bearing surfaces of a rotor disc, and the bearing surfaces (148) of the support member (126) represent bearing surfaces of a blade root.

7. Method according to any of claim 1, **characterized in that** the support of the turbine engine parts is a support of at least one blade root against a recess projection of a rotor disc.

8. Method according to any of claim 1, **characterized in that** said variable parameters are geometrical parameters.

9. Method according to any one of claims 3 to 8, **characterized in** the region corresponds to a contact region of which the position (P) corresponds to a percentage of the total length (L') pf the support member.

10. Method according to the preceding claim, **characterized in** the position (P) of the contact region is comprised between 20% and 40§ of the total length (L').

11. Support member (126) comprising at least two bearing surfaces (148) which are intended to cooperate with bearing surfaces (124, 148) of a test piece (110) in a test rig (100, 200) to reproduce a support of turbine engine parts, and to carry out low-cycle, and optionally high-cycle, fatigue tests, the support member being intended to be fixed to a mount (108), and the test piece (110) having to be connected to traction means (104) for loading the test piece so that it bears against each bearing surface (148) of the support member (126),
support member **characterised in that** the support member extends along a longitudinal direction and further comprises two middle portions (138) respectively supporting the two bearing surfaces (148), each middle portion (138) being connected, on the side opposite the traction means (104), by a first arm (132) to a base (128) for fixing to the mount (108), each of the middle portions being connected, on the side of the traction means (104), by a pair of second arms (134) to first ends of two parallel crossbars (130) which are at a distance from one another, second opposite ends of the crossbars being connected by another pair of second arms to the other middle portion, on the side of the traction means (104), the two pairs of second arms and first arms extending along the longitudinal direction and in opposite direction with regard to the middle portions.

12. Support member according to claim 10, the first arms (132) of which are collinear to the shearing forces applied to the bearing surfaces (124, 148) and the second arms (134) are collinear to the normal forces applied to said surfaces.

13. Support member according to claim 10, **characterized in that** said support of the turbine engine parts is a support of at least one blade root against a recess projection of a rotor disc.

14. Low-cycle, and optionally high-cycle, fatigue test rig (100, 200), comprising a support member (128) according to either claim 11 or claim 12, **characterised in that** it is optimised by the method according to any of claims 1 to 10.
